# FASCICULE DE BREVET EUROPEEN

(11) **EP 2 020 773 B1**
(45) Date de publication et mention de la délivrance du brevet: **13.04.2016**
(21) Numéro de dépôt: 08161624.5
(22) Date de dépôt: 01.08.2008
(51) Int. Cl.: H04L 9/00

(54) **Masquage d'une donnée dans un calcul**
Maskierung von Daten in einer Berechnung
Masking of a data item in a calculation

(30) Priorité: 01.08.2007 FR 0756867
(43) Date de publication de la demande: 04.02.2009
(73) Titulaire: STMICROELECTRONICS S.A., 92120 Montrouge (FR)
(72) Inventeur: Liardet, Pierre-Yvan, 13790, PEYNIER (FR); Teglia, Yannick, 13011, MARSEILLE (FR)
(74) Mandataire: Thibon, Laurent

(56) Documents cités:
- EP-A- 1 587 237
- EP-A- 1 722 502
- FR-A- 2 820 577
- US-A1- 2004 162 991

## Description

### Domaine de l'invention

La présente invention concerne de façon générale les circuits électroniques et, plus particulièrement, le masquage d'une donnée manipulée par un circuit électronique dans un calcul.

Un exemple d'application de l'invention concerne les algorithmes de chiffrement exécutés par des circuits intégrés et manipulant des quantités numériques à accès contrôlé (par exemple, des clés de chiffrement).

### Exposé de l'art antérieur

De nombreuses méthodes sont connues pour tenter de découvrir des quantités numériques manipulées par un circuit électronique, qu'il s'agisse de quantités secrètes (clés de chiffrement) ou de données à accès contrôlé.

En particulier, des attaques dites par canaux cachés exploitent une information détectable de l'extérieur du circuit pendant les calculs sans intervenir sur des entrées/sorties du circuit. Parmi ces attaques, l'invention vise par exemple les attaques par analyse du courant consommé (DPA pour Differential Power Analysis ou SPA pour Simple Power Analysis) par le circuit électronique lorsqu'il exécute un calcul manipulant des données secrètes.

Il est usuel d'utiliser une quantité aléatoire pour masquer une opération manipulant une clé. Par exemple, un texte à chiffrer est combiné avec une quantité aléatoire avant d'être combiné avec la clé de chiffrement, puis de nouveau combiné avec la même quantité aléatoire pour fournir le texte chiffré. Cela permet de masquer la corrélation entre le texte à chiffrer (connu) et la clé (secrète). Côté déchiffrement (par exemple, côté récepteur des données chiffrées), une méthode similaire peut être utilisée. Le texte chiffré est combiné avec une quantité aléatoire avant de lui appliquer la clé de déchiffrement (identique ou non à la clé de chiffrement). Puis, le résultat intermédiaire est combiné avec la même quantité aléatoire, ce qui fournit le texte déchiffré. Une telle technique protège contre des analyses de type DPA.

Toutefois, si la quantité aléatoire utilisée par une opération de masquage-démasquage peut être détectée, une corrélation peut être établie, à partir de cette quantité aléatoire et du résultat, en examinant les transitions d'états d'un registre contenant une variable servant au calcul.

Le document US-A-2004/162991 décrit une méthode selon laquelle deux registres sont utilisés pour stocker des résultats intermédiaires du calcul, un seul des registres contenant le bon résultat. Cela rend plus difficile la détection du contenu du registre par mesure de la consommation du circuit lors des changements d'états (lors de l'exécution des opérations). Toutefois, cela est coûteux en surface du circuit intégré et requiert que les registres source et de destination soient différents.

Le document EP-A-1587237 décrit une contremesure contre des attaques DPA, dans laquelle un masque est appliqué par partie.

Le document EP-A-1722502 décrit un processus de masquage de clé cryptographique dans lequel des masques différents sont utilisés pour des tours différents d'un algorithme AES.

### Résumé de l'invention

La présente invention vise à pallier tout ou partie des inconvénients des solutions connues de masquage d'une donnée dans un circuit électronique.

Un objet vise plus particulièrement une solution efficace contre des attaques par canaux cachés, notamment par analyse de la consommation du circuit.

Un autre objet vise une solution efficace contre une recombinaison avec une quantité aléatoire servant de masque.

Pour atteindre tout ou partie de ces objets ainsi que d'autres, il est prévu un procédé de chiffrement ou de déchiffrement, par un circuit intégré, d'une donnée par une clé en utilisant au moins une variable stockée dans un élément de mémorisation et mise à jour par les opérations successives, dans lequel la variable est masquée par au moins un premier masque aléatoire appliqué avant utilisation de la clé, puis démasquée par au moins un deuxième masque appliqué après utilisation de la clé, au moins un des masques étant divisible en plusieurs parties appliquées successivement à la variable et qui combinées représentent l'autre masque.

Selon un mode de mise en oeuvre, l'ordre d'application desdites parties du masque est aléatoire.

Selon un mode de mise en oeuvre, le masque est appliqué partie par partie pour le masquage et pour le démasquage avec un ordre différent.

Selon un mode de mise en oeuvre, les tailles des parties du masque sont différentes les unes des autres.

Selon un mode de mise en oeuvre, les parties du masque ont toutes la même taille.

Selon un mode de mise en oeuvre, les parties du masque ont des tailles inférieures à la taille de la variable et sont appliquées à des parties correspondantes de cette dernière.

Selon un mode de mise en oeuvre, la taille de chaque partie du masque correspond à celle de la variable.

Selon un mode de mise en oeuvre, la combinaison est de type OU-Exclusif.

Il est également prévu un circuit intégré comportant un élément propre à effectuer un chiffrement ou déchiffrement.

Il est également prévu une carte à puce comportant un tel circuit.

Il est également prévu un décodeur de signaux radiodiffusés comportant un tel circuit.

Il est également prévu un système de radiodiffusion comportant des moyens pour la mise en oeuvre du procédé.

### Brève description des dessins

Ces objets, caractéristiques et avantages, ainsi que d'autres seront exposés en détail dans la description suivante de modes de mise en oeuvre et de réalisation particuliers faite à titre non-limitatif en relation avec les figures jointes parmi lesquelles :
la figure 1 représente une carte à puce du type auquel s'applique à titre d'exemple la présente invention ;
la figure 2 représente, de façon très schématique, un récepteur de signaux radiodiffusés du type auquel s'applique à titre d'exemple la présente invention ;
la figure 3 est un schéma-bloc d'un exemple d'architecture de circuit électronique du type auquel s'applique à titre d'exemple la présente invention ;
la figure 4 est un organigramme simplifié illustrant un exemple de procédé de chiffrement d'une donnée numérique ;
la figure 5 est un organigramme simplifié illustrant un mode de mise en oeuvre d'un masquage d'une opération de chiffrement ;
la figure 6 est un organigramme simplifié illustrant un autre mode de mise en oeuvre ; et
la figure 7 est un organigramme simplifié illustrant encore un autre mode de mise en oeuvre.

De mêmes éléments ont été désignés par de mêmes références aux différentes figures.

### Description détaillée

Par souci de clarté, seuls les étapes et éléments qui sont utiles à la compréhension de l'invention ont été représentés et seront décrits. En particulier, l'exploitation des données numériques manipulées par le procédé décrit n'a pas été détaillée, l'invention étant compatible avec toute exploitation classique de calculs algorithmiques.

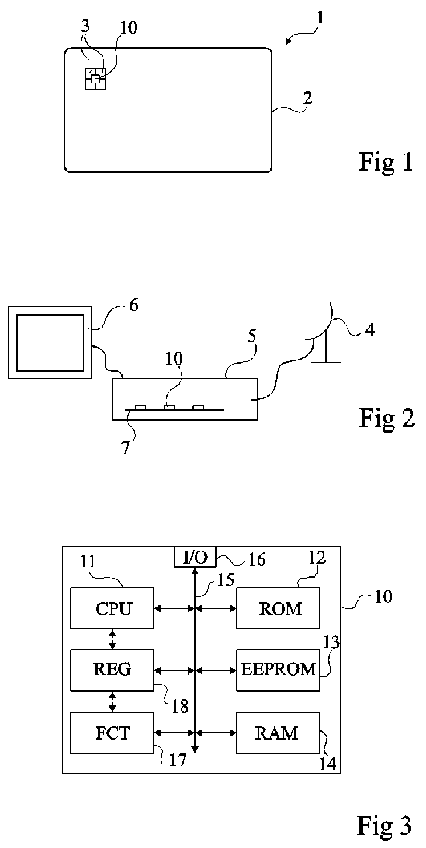

La figure 1 représente, de façon très schématique, une carte à puce 1 du type auquel s'applique à titre d'exemple la présente invention. Une telle carte est, par exemple, constituée d'un support 2 en matière plastique dans ou sur lequel est rapportée une puce 10 de circuit électronique susceptible de communiquer avec l'extérieur au moyen de contacts 3 ou au moyen d'éléments (non représentés) d'émission-réception sans contact.

Le circuit 10 de la carte contient une unité de traitement dont au moins une fonction effectue des calculs sur une donnée en utilisant une clé considérée comme sensible ou à accès contrôlé. Par accès contrôlé, on entend une quantité numérique que l'on souhaite protéger contre des tentatives de piratage en particulier de type par analyse de la consommation du circuit électronique.

La figure 2 représente un autre exemple d'application de la présente invention à des systèmes de télédiffusion à accès contrôlé. Dans cet exemple, une antenne 4 reçoit des signaux provenant d'un satellite (non représenté) qu'elle transmet à un décodeur 5 pour affichage sur un téléviseur 6. Le décodeur 5 comporte une ou plusieurs cartes électroniques 7 pourvues d'un ou plusieurs circuits 10 de traitement de données numériques reçues. Ce traitement consiste en un décodage (déchiffrement) au moyen d'une ou plusieurs clés que possède le décodeur 5. Ces clés sont contenues dans des mémoires associées au circuit électronique 10 ou sur un élément externe, par exemple, une carte à puce introduite dans le décodeur 5.

La figure 3 est un schéma-bloc d'un mode de réalisation d'un circuit électronique 10. Ce circuit comporte une unité centrale de traitement 11 (CPU) capable d'exécuter des programmes contenus dans une ou plusieurs mémoires. Dans cet exemple, le circuit 10 comporte une mémoire non volatile et non reprogrammable 12 (ROM), une mémoire non volatile reprogrammable 13 (EPROM) et une mémoire vive 14 (RAM). Un ou plusieurs bus 15 de données, d'adresses et de commande servent de support de communication entre les différents constituants du circuit 10 et avec une interface 16 (I/O) d'entrée/sortie pour communication avec ou sans contact avec l'extérieur. Le plus souvent, le circuit 10 comporte d'autres fonctions (bloc 17, FCT) dépendant de l'application. Il s'agit, par exemple, d'une cellule de calcul cryptographique dédiée pour mettre en oeuvre des algorithmes de chiffrement et de déchiffrement. De tels algorithmes sont, selon l'application et la constitution du circuit, mis en oeuvre par l'unité de traitement ou par une cellule dédiée. Les calculs exploitent des éléments de mémorisation temporaire 18 (par exemple des registres) affectés à l'unité 11 et/ou à la cellule 17, et des opérateurs pour une mise en oeuvre matérielle (logique câblée) ou au moins partiellement logicielle.

Par la suite, et selon un exemple de réalisation, on désignera par PT (Plain Text) la donnée à traiter au moyen de l'algorithme exploitant la clé, par K la clé (ou la donnée à protéger), et par CT (Ciphered Text) la donnée résultat (chiffrée) de l'application de l'algorithme à la donnée PT avec la clé K. La donnée PT provient généralement de l'extérieur du circuit 10 et est stockée temporairement dans un élément de mémorisation volatile (registre 18 ou mémoire 14). La clé K est souvent contenue dans un élément de mémoire non volatile (12 ou 13) ou est dérivée temporairement à partir d'une autre clé contenue dans un tel élément.

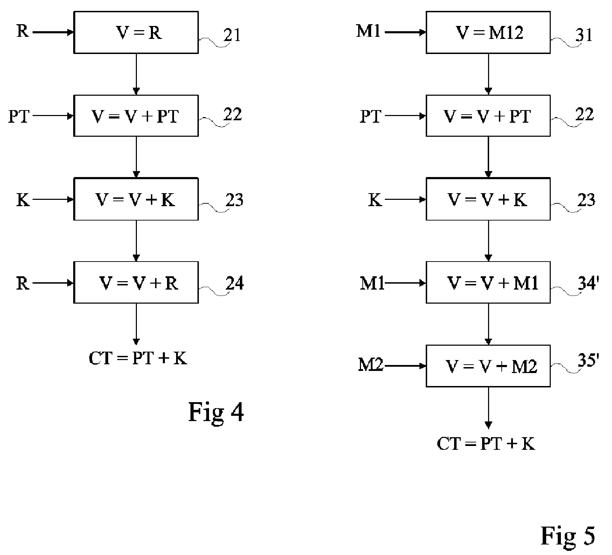

La figure 4 illustre un mode de masquage usuel au moyen d'une quantité aléatoire R de même taille (nombre de bits) que les quantités PT et K. Les calculs sont généralement effectués en utilisant une seule variable résultat V (un même registre) mise à jour au fur et à mesure des étapes successives.

Une première étape (bloc 21, V = R) consiste à charger une quantité aléatoire R dans la variable résultat V. Puis (bloc 22, V = V + PT), la donnée à chiffrer est combinée (généralement par un OU-Exclusif, c'est-à-dire une addition bit à bit désignée par le symbole "+") avec la quantité aléatoire R. Puis (bloc 23, V = V + K), la clé K est combinée au résultat intermédiaire pour fournir la donnée chiffrée et enfin (bloc 24, V = V + R), le résultat intermédiaire est démasqué en appliquant de nouveau la même quantité aléatoire R, ce qui fournit le texte chiffré CT.

La quantité CT ne permet pas de trouver de corrélation entre les données PT et K. Par contre, si la quantité R peut être détectée par un fraudeur, sa recombinaison avec le résultat redonne une corrélation entre les quantités PT et K. Or, la quantité R est présente, par exemple, dans le registre stockant la variable V à la première étape. Par conséquent, en interprétant les changements d'états de la variable V lors des combinaisons des étapes 21 et 23, un fraudeur peut, connaissant la donnée PT, découvrir la clé K, car R + ((R + PT) + K) = PT + K.

La figure 5 illustre un mode de mise en oeuvre dans lequel différentes quantités aléatoires sont utilisées pour masquer et démasquer les calculs. Comme précédemment, une même variable V contient les résultats successifs des opérations effectuées.

Une première étape (bloc 31, V = M12) consiste à charger une première quantité de masquage M12 dans la variable résultat V. Cette quantité correspond à une combinaison de deux autres quantités M1 et M2 (M12 = M1 + M2) effectuée de façon séparée du calcul. Par exemple, la quantité M12 est précalculée à partir de deux quantités M1 et M2 issues d'un tirage aléatoire. Aucune des quantités M1 et M2 ne transite cependant par la variable V juste avant l'étape 31. Puis (bloc 32, V = M12 + PT), la donnée à chiffrer PT est combinée avec la quantité M12. En variante, les étapes 31 et 22 sont inversées, c'est-à-dire que la donnée PT est d'abord chargée dans le registre de la variable V, puis est combinée avec la quantité M12. Puis (bloc 34, V = V + K), le résultat intermédiaire (la donnée PT masquée) est combiné avec la clé K. Le démasquage s'effectue alors en utilisant successivement les quantités aléatoires M1 et M2 (ou M2 et M1). Ainsi, la quantité M1 est d'abord combinée (bloc 34', V = V + M1) avec le résultat intermédiaire contenu dans la variable M12, puis c'est au tour de la quantité M2 (bloc 36, V = V + M2) pour fournir la donnée chiffrée CT. On peut considérer que le masque M12 est appliqué partie par partie (M1 puis M2) pour le démasquage, après avoir été masqué par une quantité (la quantité M12) différente de M1 et de M2, les masques M1, M2 et M12 ont une taille égale à celle des données manipulées.

Un avantage est qu'aucun point du calcul ne fournit la valeur des masques M1 et M2 ou le résultat M12 de leur combinaison. Par conséquent, il devient plus compliqué pour un fraudeur de retrouver la clé K. Il lui faudrait surveiller les transitions lors des combinaisons des étapes 31, 22, 23, 34' et 35' pour retomber sur une corrélation des données PT et K.

Or, plus le nombre de combinaisons à surveiller par le fraudeur augmente, plus il lui faut pouvoir déterminer avec précision les instants (points du calcul) où les états de l'élément de mémorisation temporaire stockant la variable V transitent vers les résultats intermédiaires souhaités. La tâche d'un fraudeur est donc rendue plus complexe, voire quasi impossible en augmentant le nombre de quantités aléatoires utilisées successivement. La contrepartie d'une telle mise en oeuvre est un allongement de la durée du chiffrement et du déchiffrement.

Une technique similaire peut être mise en oeuvre côté déchiffrement.

En variante, les quantités M1 et M2 sont utilisées avant combinaison avec la clé K, et le démasquage est effectué par la quantité M12.

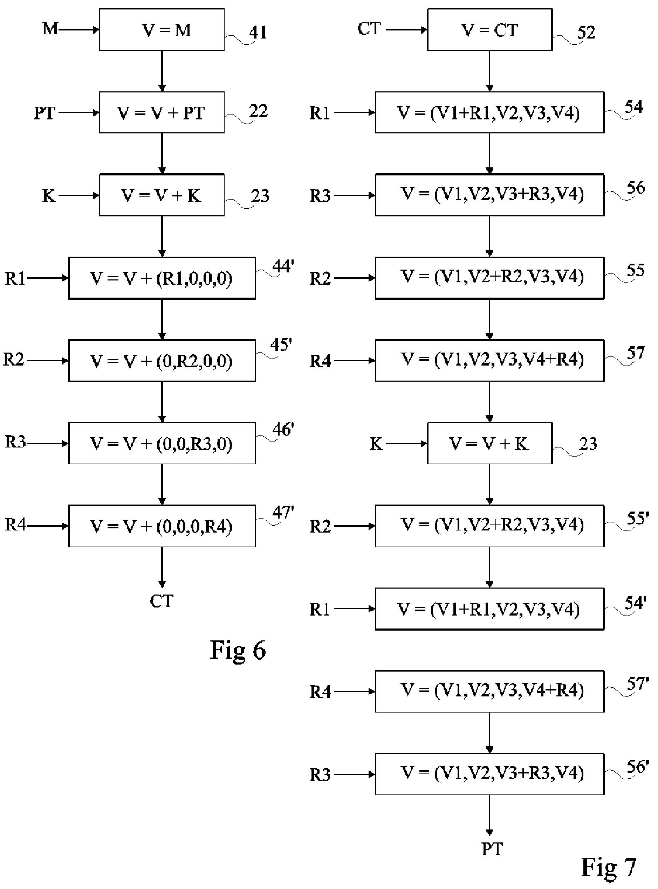

La figure 6 illustre un autre mode de mise en oeuvre selon lequel un masque M est constitué d'une quantité aléatoire divisible en parties appliquées dans un ordre différent au masquage et au démasquage. Le masque entier (la concaténation des parties) a, de préférence, la taille de la donnée à chiffrer PT (ou à déchiffrer CT) et de la clé K.

Dans l'exemple de la figure 6, le masque M est appliqué en une seule fois à la donnée à chiffrer (blocs 21, V = M et bloc 22, V = V + PT). La clé est ensuite appliquée (bloc 23, V = V + K). L'application par partie est effectuée au niveau du démasquage où les n parties du masque sont appliquées successivement aux parties correspondantes de la variable de résultat intermédiaire. En prenant pour exemple un masque M = (R1,R2,R3,R4), où R1 à R4 désignent 4 (n = 4) parties aléatoires formant, une fois concaténées, le masque M, et en désignant par V1, V2, V3 et V4 les parties correspondantes de la variable résultat, V = (V1,V2,V3,V4), cela revient à effectuer successivement les quatre combinaisons illustrées aux blocs 44' (V = V + (R1,0,0,0)), 45' (V = V + (0, R2, 0, 0)), 46' (V = V + (0,0,R3,0)), et 47' (V = V + (0,0,0,R4)). L'ordre des étapes 44' à 47' n'a pas d'importance pour la récupération du texte chiffré CT. Bien entendu, les parties R1 à R4 ne sont pas identiques les unes aux autres, la probabilité qu'elles soient toutes identiques (M = {0} ou M = {1}) étant négligeable en raison du tirage aléatoire. Le masque est stocké, entre les opérations de masquage et de démasquage, dans un élément de mémorisation temporaire (par exemple, un des registres 18 ou une zone de la mémoire 14).

Selon un mode de mise en oeuvre préféré, cet ordre est aléatoire. Il suffit pour cela d'effectuer un tirage aléatoire des rangs 1 à 4 des parties impliquées. Cela revient à effectuer une permutation aléatoire. Le tirage aléatoire change préférentiellement pour chaque chiffrement ou déchiffrement.

La figure 7 illustre un autre mode de mise en oeuvre selon lequel l'application du masque par partie est effectuée pour le masquage et le démasquage. Cette figure prend pour exemple un déchiffrement d'un texte CT en un texte PT et une initialisation de la variable V (bloc 52, V = CT) avec la donnée plutôt qu'avec le masque. Au lieu d'effectuer une combinaison de tout le résultat intermédiaire avec un mot dont seul une partie est non nulle comme dans l'exemple de la figure 6 (0 représentant l'élément neutre de l'opération de combinaison), la figure 7 illustre une autre possibilité qui est de ne combiner à chaque fois que les parties pertinentes. Les deux méthodes sont bien entendu combinables.

Le masque est appliqué dans l'ordre R1 (bloc 54, V = (V1+R1,V2,V3,V4)), R3 (bloc 56, V = (V1,V2,V3+R3,V4)), R2 (bloc 55, V = (V1,V2+R2,V3,V4)), et R4 (bloc 57, V = (V1,V2,V3,V4+R4)) avant combinaison 23 avec la clé, puis réappliqué pour démasquer dans l'ordre R2 (bloc 55', V = (V1,V2+R2,V3,V4)), R1 (bloc 54', V = (V1+R1,V2,V3,V4)), R4 (bloc 57', V = (V1,V2,V3,V4+R4)), R3 (bloc 56', V = (V1,V2,V3+R3,V4)).

Le tirage aléatoire fixant préférentiellement l'ordre du masquage n'a pas besoin d'être conservé (mémorisé) pour obtenir l'ordre du démasquage qui est obtenu par un autre tirage aléatoire. Cela rend encore plus difficile un éventuel piratage.

Selon une autre variante, le masque est appliqué par partie au masquage et en entier au démasquage.

Le choix du nombre de parties, c'est-à-dire la granularité (bit, doublet, octet, etc.) du masque M est un compromis entre la sécurité souhaitée et le temps de calcul supplémentaire.

Des modes de réalisation particuliers de la présente invention ont été décrits. Diverses variantes et modifications apparaîtront à l'homme de l'art. En particulier, d'autres étapes de calcul que la combinaison avec la clé peuvent être insérées entre les étapes de masquage et de démasquage. Ces étapes dépendent de l'algorithme de chiffrement utilisé. A titre d'exemple, on pourra utiliser des algorithmes de chiffrement connus sous les dénominations DES, AES, RSA.

Par ailleurs, d'autres fonctions de combinaison peuvent être mises en oeuvre pourvu de respecter les propriétés d'un masquage et/ou d'un démasquage possible par partie. De même, les parties du masque ne sont pas nécessairement de tailles identiques les uns aux autres, ou pour le masquage et le démasquage, pourvu d'être appliquées à des parties correspondantes de la variable V.

De plus, différentes fonctions de permutation peuvent être mises en oeuvre, voire des fonctions plus complexes. Par exemple la fonction mise en oeuvre dans le mode de réalisation de la figure 6 est du type de celle décrite dans le document US-A-2000/054163 et consiste à choisir la position de la partie du masque de manière aléatoire et les positions suivantes en ajoutant, à la position précédente, un nombre aléatoire généré une fois au départ et respectant la contrainte d'être premier avec la taille de la donnée à masquer.

Selon un autre exemple, cette fonction est du type de celle décrite dans le brevet américain 7 116 783 et consiste à choisir la position de la partie de manière aléatoire et à répéter ce choix aléatoire jusqu'à ce que toutes les parties du masque aient été traitées, certaines ayant pu l'être plusieurs fois.

## Revendications

1. Procédé de chiffrement ou de déchiffrement, par un circuit intégré (10), d'une donnée (PT, CT) par une clé (K) en utilisant au moins une variable (V) stockée dans un élément de mémorisation (18) et mise à jour par les opérations successives, **caractérisé en ce que** la variable est masquée par au moins un premier masque aléatoire (M) appliqué avant utilisation de la clé, puis démasquée par au moins un deuxième masque appliqué après utilisation de la clé, les masques étant divisibles en plusieurs parties (M1, M2 ; R1, R2, R3, R4) appliquées successivement à la variable ; le résultat de la combinaison des parties d'un des masques étant égal à l'autre masque et inversement, l'ordre d'application des parties des masques étant différent pour le masquage et pour le démasquage.

2. Procédé selon la revendication 1, dans lequel l'ordre d'application desdites parties (M1, M2 ; R1, R2, R3, R4) du masque (M) est aléatoire.

3. Procédé selon la revendication 1 ou 2, dans lequel les tailles des parties (R1, R2, R3, R4) du masque (M) sont différentes les unes des autres.

4. Procédé selon la revendication 1 ou 2, dans lequel les parties (M1, M2 ; R1, R2, R3, R4) du masque (M) ont toutes la même taille.

5. Procédé selon l'une quelconque des revendications 1 à 4, dans lequel les parties (R1, R2, R3, R4) du masque (M) ont des tailles inférieures à la taille de la variable (V) et sont appliquées à des parties correspondantes (V1, V2, V3, V4) de cette dernière.

6. Procédé selon la revendication 4, dans lequel la taille de chaque partie (M1, M2) du masque (M) correspond à celle de la variable.

7. Procédé selon l'une quelconque des revendications 1 à 6, dans lequel la combinaison est de type OU-Exclusif.

8. Circuit intégré comportant un élément propre à effectuer un chiffrement ou déchiffrement conforme à l'une quelconque des revendications 1 à 7.

9. Carte à puce comportant un circuit selon la revendication 8.

10. Décodeur de signaux radiodiffusés comportant un circuit selon la revendication 8.

11. Système de radiodiffusion comportant des moyens pour la mise en oeuvre du procédé selon l'une quelconque des revendications 1 à 7.

## Patentansprüche

1. Ein Verfahren zum Verschlüsseln oder Entschlüsseln, durch eine integrierte Schaltung (10), von Daten (PT, CT) mit einem Schlüssel (K) durch Verwenden wenigstens einer Variable (V), die in einem Speicherelement (18) gespeichert ist und durch die nachfolgenden Operationen bzw. Vorgänge aktualisiert wird, **dadurch gekennzeichnet, dass** die Variable durch wenigstens eine erste zufällige Maske (M) maskiert wird, die vor Verwendung des Schlüssels angewandt wird, dann demaskiert wird durch wenigstens eine zweite Maske, die nach Verwendung des Schlüssels angewandt wird, wobei die Masken, die in mehrere Teile (M1, M2; R1, R2, R3, R4) unterteilbar sind, aufeinander folgend auf die Variable angewandt werden; wobei das Ergebnis der Kombination der Teile einer der Masken gleich der anderen Maske ist, und umgekehrt, wobei sich die Reihenfolge der Anwendung der Maskenteile für das Verschlüsseln und Entschlüsseln unterscheidet.

2. Verfahren nach Anspruch 1, wobei die Reihenfolge der Anwendung der Teile (M1, M2; R1, R2, R3, R4) der Maske (M) zufällig ist.

3. Verfahren nach Anspruch 1 oder 2, wobei die Größen der Teile (R1, R2, R3, R4) der Maske (M) sich voneinander unterscheiden.

4. Verfahren nach Anspruch 1 oder 2, wobei die Teile (M1, M2; R1, R2, R3, R4) der Maske (M) alle die gleiche Größe haben.

5. Verfahren nach einem der Ansprüche 1 bis 4, wobei die Teile (R1, R2, R3, R4) der Maske (M) alle geringere Größen haben als die Größe der Variable (V) und auf entsprechende Teile (V1, V2, V3, V4) davon angewandt werden.

6. Verfahren nach Anspruch 4, wobei die Größe jedes Teils (M1, M2) der Maske (M) der der Variable entspricht.

7. Verfahren nach einem der Ansprüche 1 bis 6, wobei die Kombination vom XOR-Typ ist.

8. Eine integrierte Schaltung, die ein Element aufweist, das in der Lage ist, das Verschlüsseln oder Entschlüsseln irgendeines der Ansprüche 1 bis 7 durchzuführen.

9. Eine Smart-Card, die die Schaltung nach Anspruch 8 aufweist.

10. Ein Broadcast-Signal-Decodierer, der die Schaltung nach Anspruch 8 aufweist.

11. Ein Broadcast-System, das Mittel zum Implementieren des Verfahrens nach einem der Ansprüche 1 bis 7 aufweist.

## Claims

1. A method of ciphering or deciphering, by an integrated circuit (10), of data (PT, CT) with a key (K) by using at least one variable (V) stored in a storage element (18) and updated by the successive operations, **characterized in that** the variable is masked by at least one first random mask (M) applied before use of the key, then unmasked by at least one second mask applied after use of the key, the masks being dividable into several portions (M1, M2; R1, R2, R3, R4) successively applied to the variable; the result of the combination of the portions of one of the masks being equal to the other mask, and conversely, the order of application of the mask portions being different for the ciphering and the deciphering.

2. The method of claim 1, wherein the order of application of said portions (M1, M2; R1, R2, R3, R4) of the mask (M) is random.

3. The method of claim 1 or 2, wherein the sizes of the portions (R1, R2, R3, R4) of the mask (M) are different from one another.

4. The method of claim 1 or 2, wherein the portions (M1, M2; R1, R2, R3, R4) of the mask (M) all have the same size.

5. The method of any of claims 1 to 4, wherein the portions (R1, R2, R3, R4) of the mask (M) have sizes smaller than the size of the variable (V) and are applied to corresponding portions (V1, V2, V3, V4) thereof.

6. The method of claim 4, wherein the size of each portion (M1, M2) of the mask (M) corresponds to that of the variable.

7. The method of any of claims 1 to 6, wherein the combination is of XOR type.

8. An integrated circuit comprising an element capable of performing the ciphering or deciphering of any of claims 1 to 7.

9. A smart card comprising the circuit of claim 8.

10. A broadcast signal decoder comprising the circuit of claim 8.

11. A broadcasting system comprising means for implementing the method of any of claims 1 to 7.
